Europäisches Patentamt

European Patent Office

Office européen des brevets

(19)

(11) **EP 0 818 031 B2**

(12) **NOUVEAU FASCICULE DE BREVET EUROPEEN**

(45) Date de publication et mention de la décision concernant l'opposition:
**24.05.2006 Bulletin 2006/21**

(45) Mention de la délivrance du brevet:
**16.06.1999 Bulletin 1999/24**

(21) Numéro de dépôt: **96910058.5**

(22) Date de dépôt: **27.03.1996**

(51) Int Cl.:
*G07F 7/10* (2006.01)    *G06Q 20/00* (2006.01)

(86) Numéro de dépôt international:
**PCT/FR1996/000456**

(87) Numéro de publication internationale:
**WO 1996/030881 (03.10.1996 Gazette 1996/44)**

(54) **CARTE A MEMOIRE ET PROCEDE POUR FIABILISER UNE DEMANDE D'ACCES A UNE APPLICATION**

SPEICHERKARTE UND VERFAHREN ZUM ERHÖHEN DER ZUVERLÄSSIGKEIT DES ZUGANGSANTRAGES ZU EINER ANWENDUNG

SMART CARD AND METHOD FOR ENHANCING THE RELIABILITY OF AN APPLICATION ACCESS REQUEST

(84) Etats contractants désignés:
**BE DE ES FR GB IT NL**

(30) Priorité: **31.03.1995 FR 9503837**

(43) Date de publication de la demande:
**14.01.1998 Bulletin 1998/03**

(73) Titulaire: **Axalto S.A.**
**92120 Montrouge (FR)**

(72) Inventeur: **THIRIET, Fabien**
**F-45100 Orléans (FR)**

(74) Mandataire: **Fruchard, Guy et al**
**Cabinet Boettcher**
**22, rue du Général Foy**
**75008 Paris (FR)**

(56) Documents cités:
**EP-A- 0 337 794        EP-A- 0 418 144**
**WO-A-89/06398        WO-A-94/06103**
**FR-A- 2 589 268**

EP 0 818 031 B2

**Description**

La présente invention concerne une carte à mémoire permettant de fiabiliser une demande d'accès à une application, et un procédé pour fiabiliser une demande d'accès à une application.

On connaît des systèmes associant des terminaux à des cartes à mémoire pour permettre l'accès à une application gérée par le terminal après avoir vérifié que la carte introduite dans le terminal est apte à donner accès à l'application correspondante En particulier, l'une des vérifications consiste à comparer un numéro d'identification personnel présenté par l'utilisateur avec un code secret contenu dans la carte et ne donner accès à l'application que si la comparaison est positive. Afin d'améliorer la fiabilité du traitement des demandes d'accès et empêcher un fraudeur de procéder impunément à un grand nombre de demandes d'accès successives, les cartes actuelles comportent en outre un bloc de mémoire dans lequel est stocké le nombre de demandes d'accès au cours desquelles un numéro d'identification personnel erroné a été présenté par l'utilisateur, et des moyens d'inhibition pour mettre la carte hors service lorsque ce nombre de demandes d'accès erroné atteint un maximum toléré.

Dans ces systèmes le contrôle de l'accès est géré de manière booléenne et il n'est donc pas possible de détecter une utilisation frauduleuse de la carte dès l'instant où l'utilisateur répond de façon satisfaisante aux questions qui lui sont posées.

Afin de lutter contre l'utilisation abusive de la carte, le cas échéant par le titulaire de la carte lui-même, on connaît notamment des documents EP-A-418 144 et WO-A-89/06398 des systèmes dans lesquels le terminal comporte des moyens d'analyse de la transaction demandée et des moyens statistiques de comparaison de la transaction avec des transactions effectuées de façon habituelle par d'autres utilisateurs en relation avec l'application considérée afin de déterminer si la demande de transaction peut être considérée comme une demande normale ou anormale. Afin de ne pas pénaliser un utilisateur de bonne foi il est nécessaire de prévoir des moyens informatiques très importants pour stoker et traiter les informations nécessaires à l'évaluation statistique du risque représenté par la transaction. Un tel système présente donc l'inconvénient d'être très coûteux. En outre, le traitement statistique est effectué par référence à un grand nombre d'utilisateurs de sorte que lorsqu'une carte est utilisée par un fraudeur ayant subtilisé celle-ci à son titulaire et utilisant pour effectuer des transactions semblables à celles des autres utilisateurs, il n'est pas possible de détecter le caractère frauduleux de la demande d'accès.

Un but de l'invention est de proposer une carte et un procédé permettant de fiabiliser de façon personnalisée une demande d'accès à une application.

En vue de la réalisation de ce but on prévoit selon l'invention une carte à mémoire comportant un microprocesseur principal associé à un bloc d'entrée/sortie et des blocs mémoire, caractérisée en ce que l'un au moins des blocs mémoire contient des paramètres de fiabilité et des poids de fiabilité respectifs de ces paramètres et en ce que le microprocesseur comporte des moyens de calcul d'un poids de fiabilité interactive correspondant à une demande d'accès à une application et des moyens de comparaison du poids de fiabilité interactive à un indice de fiabilité d'accès FA.

Ainsi, chaque carte peut être personnalisée de façon conforme aux habitudes du titulaire de la carte en agissant sur les poids de fiabilités des différents paramètres de sorte que lors du traitement de ces paramètres à l'occasion d'une demande d'accès à une application, la réponse à cette demande d'accès sera automatiquement personnalisée.

Selon une version avantageuse de l'invention la carte à mémoire comporte en outre une table d'interaction entre les paramètres. Ainsi, tout en attribuant des poids de fiabilité identiques à différents porteurs de carte, il reste possible de personnaliser la carte à chaque utilisateur en agissant sur la table d'interaction.

Selon un autre aspect de l'invention, celle-ci concerne un procédé pour fiabiliser une demande d'accès à une application au moyen d'une carte à mémoire contenant des paramètres de fiabilité associés à des poids de fiabilité respectifs, ce procédé comportant les étapes de:

- déterminer les poids de fiabilité correspondant à la demande d'accès,
- calculer un poids de fiabilité interactive en fonction des poids de fiabilité respectifs de la demande d'accès,
- comparer le poids de fiabilité interactive à un indice de fiabilité d'accès, et
- autoriser ou refuser l'accès à l'application en fonction du résultat de la comparaison.

De préférence, dans le cas d'un refus d'accès le procédé comporte l'étape de réduire le poids de fiabilité d'au moins un des paramètres de fiabilité ou d'augmenter l'indice de fiabilité d'accès. Ainsi, lorsqu'une carte est utilisée par un fraudeur qui ne connaît pas les habitudes du titulaire de la carte, les conditions d'accès à une application sont progressivement rendues de plus en plus sévères de sorte que la carte est rapidement rendue inutilisable.

A l'inverse, dans le cas d'une autorisation d'accès, le procédé comporte de préférence l'étape d'augmenter au moins un poids de fiabilité d'au moins un des paramètres de fiabilité pour une situation correspondante à la demande d'accès. Il est ainsi possible pour le titulaire de la carte qui souhaite modifier ses habitudes d'effectuer progressivement une modification correspondante des conditions d'évaluation d'une demande d'accès.

D'autres caractéristiques et avantages de l'invention apparaitront à la lecture de la description qui suit d'un mode de réalisation particulier non limitatif de l'invention, en relation avec les figures ci-jointes parmi lesquelles:

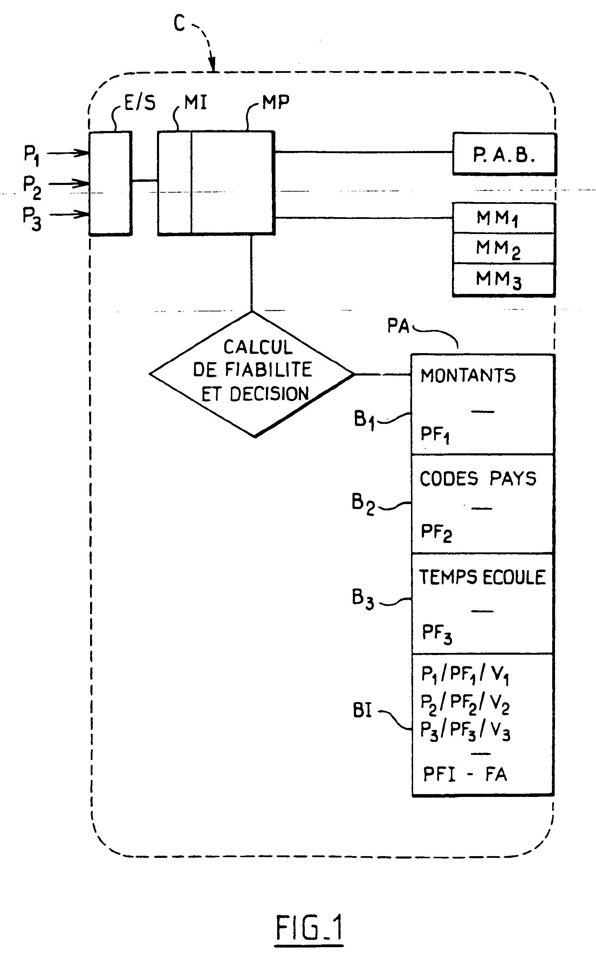

- la figure 1 est une vue synoptique des différentes modules et microprocesseurs d'une carte à mémoire selon l'invention ;
- la figure 2 est un schéma de blocs illustrant un procédé de mise en oeuvre d'une carte selon l'invention.

La carte à mémoire représentée C est prévue pour gérer les habitudes d'achat d'un utilisateur ayant correctement indiqué le numéro d'identification personnel qui lui a été attribué par sa banque.

Trois paramètres $P_1$, $P_2$, $P_3$ sont pris en compte par la carte à mémoire, avant d'autoriser un achat :

- le paramètre $P_1$ est le montant de l'achat ;
- le paramètre $P_2$ est le lieu d'achat ;
- le paramètre $P_3$ est le temps écoulé depuis le dernier achat.

La carte à mémoire comprend un bloc d'entrée/sortie E/S avec le monde extérieur, pour lire les paramètres $P_1$, $P_2$, $P_3$ lors d'une tentative d'achat.

Le bloc E/S est relié à un microprocesseur principal MP et à des moyens d'inhibition MI connus, pour le cas échéant interdire l'utilisation de la carte à mémoire.

le microprocesseur MP est relié à :

- des programmes applicatifs bancaires PAB ;
- des composants mémoire $MM_1$, $MM_2$, $MM_3$ pour mémoriser les paramètres $P_1$, $P_2$ et $P_3$ respectivement ;
- des composants électroniques de calcul et de comparaison, pour calculer la fiabilité de chaque tentative d'achat et pour donner aux moyens d'inhibition MI les instructions de paramètre ou d'arrêt de la tentative d'achat;
- un processeur additionnel PA.

Le processeur additionnel PA comprend un bloc-mémoire d'interaction BI et trois autres blocs-mémoire $B_1$, $B_2$ et $B_3$ pour chaque paramètre respectivement.

Le bloc $B_1$ contient les montants des achats pouvant être demandés et des poids de fiabilité $PF_1$ correspondants. A titre d'exemple on a :

| Montants des achats demandés | Poids de fiabilité $PF_1$ |
|---|---|
| 0 à 20 | 0,01 |
| 21 à 40 | 0,5 |
| 41 à 250 | 1 |
| 251 à 500 | 0,5 |
| 501 à 3000 | 0,01 |
| plus de 3000 | 0 |

Le bloc $B_2$ contient le code des lieux d'achats demandés et des poids de fiabilité $PF_2$ correspondant. Par exemple :

| Code pays | Poids de fiabilité $PF_2$ |
|---|---|
| France | 0,7 |
| Allemagne | 0,2 |
| Autre pays | 0,1 |

Le bloc $B_3$ contient les temps écoulés entre deux achats, calculé à partir du dernier achat effectué, et des poids de fiabilité $PF_3$ correspondant. Par exemple :

| Temps écoulé, selon le lieu d'achat | $PF_3$ |
|---|---|
| Moins d'un jour ou un jour en France | 1 |
| Plus d'un jour en France | 0,1 |
| Moins d'un jour ou un jour à l'étranger | 0,1 |
| Plus d'un jour à l'étranger | 1 |
| Plus de 5 jours à l'étranger | 0 |

Ces données sont mémorisées dans la carte à mémoire en fonction des habitudes d'achat de l'utilisateur, le poids de fiabilité le plus élevé étant attribué à la situation la plus fréquence. Dans l'exemple donné :

- les achats moyens (70 % des cas) sont entre 41 et 250 ;
- ils ont lieu en France dans 70 % des cas, en Allemagne dans 20 % des cas ;
- les achats sont fréquents en France (trois par jour en moyenne), mais plus rares à l'étranger (un tous les trois jours).

Le bloc d'interaction BI contient une table d'interaction entre les paramètres. Cette table d'interaction permet de pondérer l'importance de chacun des paramètres indépendamment de leur poids de fiabilité respectifs. Par exemple :

| Paramètre | Poids de fiabilité | Valeur d'interaction |
|---|---|---|
| $P_1$ | $PF_1$ | $V_1 = 0,30$ |
| $P_2$ | $PF_2$ | $V_2 = 0,50$ |
| $P_3$ | $PF_3$ | $V_3 = 0,20$ |

Le bloc BI contient également en mémoire un indice de fiabilité FA, par exemple FA = 0,2.

Le processeur PA dédié peut ainsi calculer le poids de fiabilité interactive PFI, défini dans cet exemple non limitatif par la formule suivante :

$$PFI = (PF_1 \times V_1) + (PF_2 \times V_2) + (PF_3 \times V_3)$$

Lorsque l'utilisateur veut effectuer un achat, les poids de fiabilité correspondants aux trois paramètres $P_1$, $P_2$, $P_3$ sont déterminés par un dialogue avec le terminal dans lequel la carte est introduite, le montant étant saisi sur un clavier du terminal tandis que le lieu et la date sont donnés automatiquement par le terminal. Les poids de fiabilité ainsi obtenus sont mémorisés en $MM_1$, $MM_2$, $MM_3$, respectivement. On notera à ce propos que dans l'exemple donné la situation du paramètre $P_3$ est déterminée par comparaison avec la date de la transaction précédente. A cet effet on prévoira de préférence dans le bloc $B_3$ un emplacement permettant de mémoriser la date de la dernière transaction effectuée, cette date étant mise à jour à la fin de chaque transaction.

Puis, le processeur PA calcule le poids de fiabilité interactive PFI, au moyen de la table d'interaction BI.

Enfin, le processeur PA compare le poids de fiabilité interactive PFI à l'indice FA et indique à la carte si la fiabilité est suffisante pour autoriser l'accès au programme applicatif bancaire.

Dans cet exemple, si PFI est ≥ 0,20, l'achat est autorisé, si PFI est < 0,20, l'achat est refusé.

Par exemple :

- l'utilisateur effectue un premier achat à Paris :
- puis, le même jour, un second achat pour 200 F Paris ; lors de ce second achat le poids de fiabilité interactive est donné par la formule :

$$(0,3 \times PF_1) + (0,5 \times PF_2) + (0,2 \times PF_3), \text{ soit}$$

$$0,3 \quad + \quad 0,35 \quad + \quad 0,2 \quad = 0,85$$

(fiabilité suffisante = l'achat est autorisé)

- ensuite, le même jour, il effectue un troisième achat de 20 F à Paris :

$$(0,3 \times 0,01) + (0,5 \times 0,7) + (0,2 \times 1) =$$

$$0,003 \quad + \quad 0,35 \quad + \quad 0,02 \quad = 0,5503$$

(fiabilité suffisante = l'achat est autorisé)

- ce même jour, l'utilisateur se rend en Allemagne et y achète pour 200 F :

$$(0,3 \times 1) + (0,5 \times 0,2) + (0,2 \times 0,1) =$$

$$0,3 \quad + \quad 0,1 \quad + \quad 0,02 \quad = 0,42$$

(fiabilité suffisante = l'achat est autorisé)

- enfin, le même jour, il souhaite effectuer un achat de 2000 F en Allemagne :

$$(0,3 \times 0,001) + (0,5 \times 0,2) + (0,3 \times 0,1) =$$

$$0,003 \quad + \quad 0,01 \quad + \quad 0,03 \quad = 0,106$$

(fiabilité insuffisante = l'achat est refusé).

Le système ainsi conçu permet, en fonction des habitudes d'un utilisateur, d'améliorer la gestion des cartes à mémoire, pour de nombreuses applications.

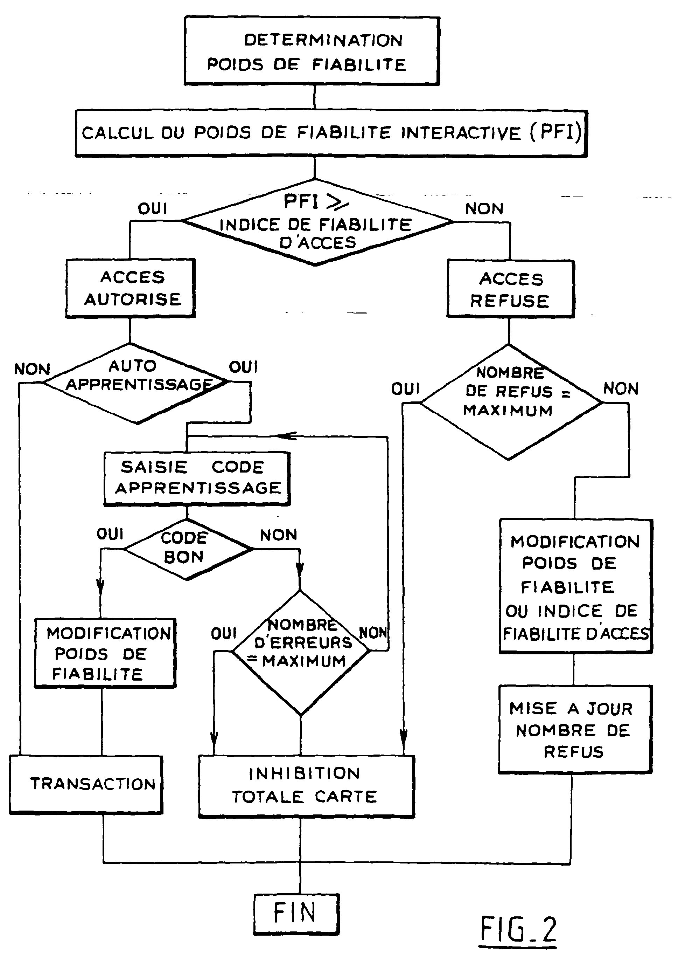

La figure 2 illustre un procédé plus sophistiqué de mise en oeuvre de la carte selon l'invention. Ce procédé comporte comme précédemment une étape de détermination des poids de fiabilité de chacun des paramètres en fonction de la demande d'accès, suivie d'un calcul du poids de fiabilité interactive et d'une comparaison avec l'indice de fiabilité d'accès.

Si l'accès est refusé on vérifie si le nombre de refus a atteint le nombre maximum prédéterminé de refus. Si le nombre maximum prédéterminé est atteint, on procède à une inhibition totale de la carte. Cette procédure permet d'éviter qu'un fraudeur qui pour une raison quelconque aurait pu s'emparer de la carte et aurait eu simultanément connaissance du numéro d'identification personnel du titulaire de la carte ne puisse procéder à des demandes d'accès successives pour déterminer les habitudes du titulaire de la carte. On notera à ce propos que contrairement au numéro d'identification personnel qui peut être observé par un tiers lors de sa saisie par le titulaire de la carte, les habitudes d'accès de l'utilisateur à l'application considérée ne peuvent à aucun moment être observées par un tiers de sorte que l'invention augmente de façon sérieuse la fiabilité d'accès à l'application considérée.

Si l'accès est refusé sans que le nombre de refus ait atteint le nombre maximum prédéterminé on procède de préférence selon l'invention à une réduction des poids de fiabilité associé à au moins l'un des paramètre, ou à une augmentation de l'indice de fiabilité d'accès. Dans un cas comme dans l'autre la comparaison du poids de fiabilité interactive avec l'indice de fiabilité d'accès sera plus défavorable à l'utilisateur de la carte qu'avant la modification et conduira donc à un contrôle plus sévère de l'accès à l'application de sorte qu'un fraudeur qui ne connaît pas les habitudes du titulaire de la carte se verra rapidement refuser l'accès à l'application quelles que soient les conditions dans lesquelles il effectue une demande d'accès. Lorsqu'il aura effectué un nombre de demandes d'accès égal au maximum prédéterminé, la carte sera définitivement inhibée.

A l'inverse, lorsque l'accès est autorisé on propose à l'utilisateur une étape d'auto-apprentissage destinée à mémoriser dans la carte un changement d'habitudes de l'utilisateur. Si l'utilisateur ne souhaite pas modifier ses habitudes il refuse l'étape d'auto-apprentissage et la transaction est effectuée sans modification des poids de fiabilité initialement enregistrés dans la carte. Si au contraire l'utilisateur souhaite procéder à une étape d'auto-apprentissage, on effectue de préférence un contrôle supplémentaire en demandant à l'utilisateur de saisir un code d'apprentissage qui est comparé à un code secret mémorisé dans la carte de façon analogue au numéro d'identification personnel. Si le code d'apprentissage est erroné l'utilisateur a la possibilité d'effectuer une nouvelle saisie à condition que le nombre d'erreurs soit inférieur à un maximum prédéterminé. Pour un nombre d'erreurs de saisie du code d'apprentissage égal à un maximum prédéterminé on procède à une inhibition totale de la carte.

Si le code d'apprentissage saisi est correct, l'étape d'auto-apprentissage est effectuée. Cette étape d'auto-apprentissage consiste à augmenter le poids de fiabilité d'au moins un des paramètres de fiabilité pour la situation correspondante à l'accès autorisée. De préférence on prévoit selon l'invention de réduire simultanément le poids de fiabilité du même paramètre de fiabilité pour des situations différentes de la demande d'accès. Pour une table comprenant k lignes associant différentes situations aux poids de fiabilité correspondant on peut prévoir d'augmenter le poids de fiabilité relatif à la situation pour laquelle un accès a été autorisé d'une valeur k x 10% tandis que les poids de fiabilité des autres lignes sont diminués de 10 %. Dans le cas d'une demande d'accès autorisée pour un montant de 2000 F en relation avec le bloc $B_1$ mentionné précédemment, la ligne correspondante à cette valeur d'achat est augmentée de 60 % de sorte que le poids de fiabilité est porté à 0,016 tandis que chacun des autres poids de fiabilité est diminué de 10 %. On peut bien entendu prévoir une limite supérieure et une limite inférieure pour le poids de fiabilité au-delà de laquelle celui-ci n'est plus modifié.

Dans le cadre de la procédure d'auto-apprentissage on peut également prévoir un retour immédiat aux poids de fiabilité initiaux lorsque ceux-ci ont été réduits par suite d'un refus d'accès.

Bien entendu l'invention n'est pas limitée au mode de réalisation décrit et on peut y apporter des variantes de réalisation sans sortir du cadre de l'invention telle que définie par les revendications.

En particulier, bien que dans l'exemple décrit la carte comporte une table d'interaction permettant de pondérer l'importance relative de chacun des paramètres, on peut prévoir selon l'invention d'incorporer directement les valeurs d'interaction dans le poids de fiabilité de chacun des paramètres.

Par ailleurs, bien que l'invention ait été décrite en relation avec un indice de fiabilité qui est mémorisé dans la carte et qui est ainsi commun à toutes les applications auxquelles la carte peut donner accès, on peut prévoir d'associer un indice de fiabilité différent pour chaque application, l'indice de fiabilité étant alors contenu dans le terminal correspondant à l'application et étant communiqué pour la comparaison avec le poids de fiabilité interactive.

Bien que l'invention ait été décrite en relation avec un calcul de poids de fiabilité interactive effectué sous forme d'une somme pondérée des poids de fiabilité individuels, on peut prévoir d'effectuer un calcul sous forme d'un produit :

$$PFI = PF_1 \text{ x } PF_2 \text{ X } PF_3$$

ou sous toute autre forme et d'adapter de façon correspondante l'indice de fiabilité d'accès FA.

Bien que l'invention ait été décrite en relation avec un code de lieu correspondant à différents pays on peut également prévoir des poids de fiabilité différents en fonction des différentes villes d'un même pays.

Bien que l'invention ait été décrite en relation avec un indice de fiabilité d'accès unique, on peut prévoir plusieurs valeurs de l'indice de fiabilité d'accès et de moduler la décision en fonction de la valeur atteinte par le poids de fiabilité interactive.

Dans l'exemple décrit ci-dessus on peut par exemple prendre en compte deux valeurs de l'indice de fiabilité d'accès 0,1 et 0,2. Si le poids de fiabilité interactive dépasse la valeur la plus élevée 0,2 l'accès est autorisé normalement. Si le poids de fiabilité interactive est compris entre les deux valeurs de l'indice de fiabilité d'accès, l'accès est autorisé de façon conditionnée, par exemple si le montant ne dépasse pas 100 Francs, et est refusé dans le cas contraire. Si le poids de fiabilité interactive est inférieur à la valeur la plus basse 0,1, l'accès est refusé quel que soit le montant.

Afin d'augmenter la sécurité en cas de vol de la carte on prévoira de préférence de diminuer les poids de fiabilité individuels ou d'augmenter les indices de fiabilité d'accès non seulement lorsque l'accès est refusé mais également lorsqu'il est autorisé de façon conditionnée.

On peut également prévoir plusieurs tables de poids de fiabilité pour certains paramètres en fonction du lieu de la demande d'accès, ou faire varier la fonction d'auto-apprentissage selon le nombre d'accès déjà autorisés.

**Revendications**

1. Carte à mémoire comportant un microprocesseur principal (MP) associé à un bloc d'entrée/sortie (E/S) et à des

blocs-mémoire ($B_1$, $B_2$, $B_3$), **caractérisée en ce que** l'un au moins des blocs-mémoire contient des paramètres de fiabilité ($P_1$, $P_2$, $P_3$) et des poids de fiabilité respectifs ($PF_1$, $PF_2$, $PF_3$) de ces paramètres et **en ce que** le microprocesseur comporte des moyens de calcul d'un poids de fiabilité interactive (PFI) correspondant à une demande d'accès à une application et des moyens de comparaison du poids de fiabilité interactive à un indice de fiabilité d'accès (FA).

2. Carte à mémoire selon la revendication 1, **caractérisée en ce qu'**elle comporte en outre une table d'interaction (BI) entre les paramètres.

3. Procédé pour fiabiliser une demande d'accès à une application au moyen d'une carte à mémoire contenant des paramètres de fiabilité ($P_1$, $P_2$, $P_3$) associés à des poids de fiabilité respectifs ($PF_1$, $PF_2$, $PF_3$), **caractérisé en ce qu'**il comporte les étapes de :

   - déterminer les poids de fiabilité correspondant à la demande d'accès,
   - calculer un poids de fiabilité interactive (PFI) en fonction des poids de fiabilité respectifs de la demande d'accès,
   - comparer le poids de fiabilité interactive à un indice de fiabilité d'accès (FA), et
   - autoriser ou refuser l'accès à l'application en fonction du résultat de la comparaison.

4. Procédé selon la revendication 3, **caractérisé en ce que** dans le cas d'un refus d'accès il comporte l'étape de réduire le poids de fiabilité d'au moins un des paramètres de fiabilité ou d'augmenter l'indice de fiabilité d'accès.

5. Procédé selon la revendication 3, **caractérisé en ce qu'**il comporte les étapes de mémoriser le nombre de refus d'accès et inhiber totalement la carte lorsque le nombre de refus d'accès atteint un nombre de refus maximum prédéterminé.

6. Procédé selon la revendication 3, **caractérisé en ce que** dans le cas d'une autorisation d'accès il comporte l'étape d'augmenter au moins un poids de fiabilité d'au moins un des paramètres de fiabilité pour une situation correspondant à la demande d'accès.

7. Procédé selon la revendication 6, **caractérisé en ce qu'**il comporte l'étape de réduire le poids de fiabilité pour des situations différentes de la demande d'accès en relation avec le paramètre dont le poids de fiabilité a été augmenté.

8. Procédé selon la revendication 3, **caractérisé en ce que** l'accès à l'application est modulé en fonction d'une valeur du poids de fiabilité interactive par rapport à différentes valeurs de l'indice de fiabilité d'accès.

**Claims**

1. A memory card including a main microprocessor (MP) associated with an input/output block (I/O) and with memory blocks ($B_1$, $B_2$, and $B_3$), the card being **characterized in that** at least one of the memory blocks contains reliability parameters ($P_1$, $P_2$, and $P_3$) and respective reliability weights ($PF_1$, $PF_2$, and $PF_3$) for said parameters, and **in that** the microprocessor includes means for computing an interactive reliability weight (PFI) corresponding to a request for access to an application, and means for comparing the interactive reliability weight with an access reliability index (FA).

2. A memory card according to claim 1, **characterized in that** it further includes a table (BI) of interactions between the parameters.

3. A method of making more reliable a request for access to an application by means of a memory card, the card containing reliability parameters ($P_1$, $P_2$, and $P_3$) associated with respective reliability weights ($PF_1$, $PF_2$, and $PF_3$), and being **characterized in that** it comprises the following steps :

   . determining the reliability weights corresponding to the access request ;
   . computing an interactive reliability weight (PFI) as a function of the respective reliability weights of the access request ;
   . comparing the interactive reliability weight with a reliability index (FA) ; and
   . authorizing or refusing access to the application as a function of the results of the comparison.

4. A method according to claim 3, **characterized in that** in the event of access being refused, the method includes a step of reducing the reliability weight of at least one of the reliability parameters or of increasing the access reliability index.

5. A method according to claim 3, **characterized in that** it includes the steps of storing the number of accesses refused and of totally inhibiting the card when the number of access refusals reaches a maximum predetermined number.

6. A method according to claim 3, **characterized in that** in the event of access being authorized, the method includes the step of increasing at least one reliability weight of at least one of the reliability parameters for a situation corresponding to the access request.

7. A method according to claim 6, **characterized in that** it includes the step of reducing the reliability weight for situations different from the access request and relating to the parameter whose reliability weight has been increased.

8. A method according to claim 3, **characterized in that** the access to the application is modulated as a function of a value of the interactive reliability weight as compared to various values of the access reliability index.

**Patentansprüche**

1. Speicherkarte, die einen Haupt-Mikroprozessor (MP) enthält, dem ein Eingangs/Ausgangs-Block (E/S) sowie Speicherblöcke ($B_1$, $B_2$, $B_3$) zugeordnet sind, **dadurch gekennzeichnet, daß** wenigstens einer der Speicherblöcke Sicherheitsparameter ($P_1$, $P_2$, $P_3$) und jeweilige Sicherheitsgewichte ($PF_1$, $PF_2$, $PF_3$) dieser Parameter enthält, und daß der Mikroprozessor Mittel zum Berechnen eines interaktiven Sicherheitsgewichts (PFI), das einer Anforderung für den Zugriff auf eine Anwendung entspricht, sowie Mittel zum Vergleichen mit einem Zugriffsicherheit-Index (FA-Index) enthält.

2. Speicherkarte nach Anspruch 1, **dadurch gekennzeichnet, daß** sie außerdem eine Tabelle (BI) der Wechselwirkungen zwischen den Parametern enthält.

3. Verfahren zum Herstellen der Sicherheit einer Anforderung für den Zugriff auf eine Anwendung mittels einer Speicherkarte, welche Sicherheitsparameter ($P_1$, $P_2$, $P_3$) enthält, denen jeweilige Sicherheitsgewichte ($PF_1$, $PF_2$, $PF_3$) zugeordnet sind, **dadurch gekennzeichnet, daß** es die folgenden Schritte enthält:

   - Bestimmen der Sicherheitsgewichte, die der Zugriffsanforderung entsprechen,
   - Berechnen eines interaktiven Sicherheitsgewichts (PFI) als Funktion der jeweiligen Sicherheitsgewichte der Zugriffsanforderung,
   - Vergleichen des interaktiven Sicherheitsgewichts mit einem Zugriffsicherheit-Index (FA-Index) und
   - Zulassen oder Zurückweisen des Zugriffs auf die Anwendung in Abhängigkeit vom Vergleichsergebnis.

4. Verfahren nach Anspruch 3, **dadurch gekennzeichnet, daß** es im Fall einer Zurückweisung des Zugriffs den Schritt des Reduzierens des Sicherheitsgewichts wenigstens eines der Sicherheitsparameter oder des Erhöhens des Zugriffsicherheit-Indexes enthält.

5. Verfahren nach Anspruch 3, **dadurch gekennzeichnet, daß** es die Schritte des Speicherns der Anzahl der Zugriffszurückweisungen und des vollständigen Sperrens der Karte, wenn die Anzahl der Zugriffszurückweisungen eine vorgegebene maximale Zurückweisungsanzahl erreicht, enthält.

6. Verfahren nach Anspruch 3, **dadurch gekennzeichnet, daß** es im Fall einer Zulassung des Zugriffs den Schritt des Erhöhens wenigstens eines Sicherheitsgewichts wenigstens eines der Sicherheitsparameter für eine der Zugriffsanforderung entsprechende Situation enthält.

7. Verfahren nach Anspruch 6, **dadurch gekennzeichnet, daß** es im Zusammenhang mit dem Parameter, dessen Sicherheitsgewicht erhöht worden ist, den Schritt des Reduzierens des Sicherheitsgewichts für von der Zugriffsanforderung verschiedene Situationen enthält.

8. Verfahren nach Anspruch 3, **dadurch gekennzeichnet, daß** der Zugriff auf die Anwendung in Abhängigkeit von einem Wert des interaktiven Sicherheitsgewichts in bezug auf verschiedene Werte des Zugriffsicherheit-Indexes moduliert wird.

**FIG.1**

FIG.2